# EUROPEAN PATENT SPECIFICATION

(11) **EP 3 293 430 B1**
(45) Date of publication and mention of the grant of the patent: **10.06.2020**
(21) Application number: 17185473.0
(22) Date of filing: 09.08.2017
(51) Int. Cl.: F16L 27/02, F16L 27/12, F16L 39/00, F01D 9/06

(54) **ARTICULATING COUPLING ASSEMBLY**
GELENKIGE KUPPLUNGSANORDNUNG
ENSEMBLE DE COUPLAGE ARTICULÉ

(30) Priority: 09.09.2016 GB 201615328
(43) Date of publication of application: 14.03.2018
(73) Proprietor: Rolls-Royce plc, London N1 9FX (GB)
(72) Inventor: van den Berg, Merijn, Derby, Derbyshire DE24 8BJ (GB)
(74) Representative: Rolls-Royce plc

(56) References cited:
- EP-A1- 2 896 862
- US-A- 5 370 427

## Description

The present invention relates to an articulating coupling assembly of the sort used to secure an end of a pipe or shaft to a fixed component whilst allowing some freedom of axial and/or angular movement of the pipe or shaft with respect to the fixed component. More particularly, but without limitation, the invention relates to such articulating couplings used to secure an oil service pipe of a gas turbine engine to a support structure within the engine.

In gas turbine engines, there is a need to feed fluids such as oil to various moving components within the engine. This presents a need for feed and scavenger pipes extending between a fluid source and these components, often radially across the engine. Such pipes are retained in position by being coupled to support structures provided within the engine. Due to large thermal differences arising in its environment during the operation of the engine, the pipe must be allowed to move radially and articulate relative to the engine support structures throughout engine operation. It is known to achieve this by inclusion of a spherical bearing adjacent where an end of the pipe is coupled to a support structure. The spherical bearing allows some articulation between the pipe and the support structure to compensate for differential thermal resizing between connected elements. To protect the pipe from consequences of torque on the pipe applied during the installation of a connecting pipe, it is known to use a coupling which incorporates an anti-rotation feature.

It is understood that large temperature differences and relative displacements acting on the pipe may be a cause of wear on the location and anti-rotation features of the coupling assembly. Such wear can become problematic if it results in dislocation or leakage of fluid from coupled pipes.

US 5 370 427A discloses an expansion joint for connect fluid carrying pipes. The joint comprises a pair of couplings for attaching to the pipes, the having same diameter bores. The couplings are arranged in axial alignment and an annular bellows extends between the couplings for accommodating axial misalignment of the pipes.

EP2896862 discloses a pipe fastener assembly comprising two pipe adapters receivable in a central bore of a fastener body. A radial projection extends from the bore to engage with a first of the pipe adapters and a threaded portion on the bore engages with a second of the pipe connectors.

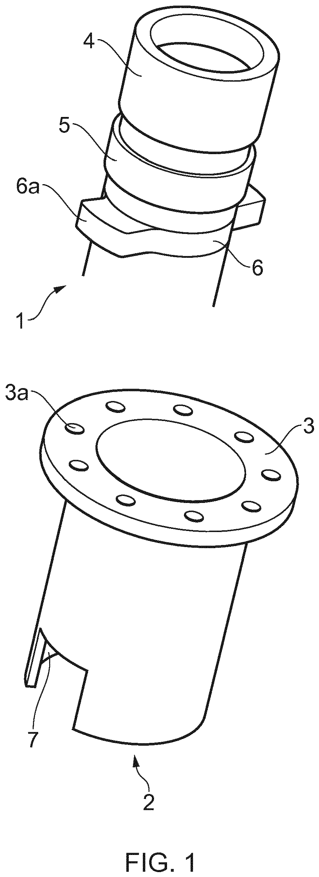

A known articulating coupling assembly is illustrated in Figure 1. The assembly shown comprises a pipe end 1 and a flanged collar 2 for receiving the pipe end 1. The pipe end may be of an oil feed/scavenger pipe. The flange 3 of the flanged collar 2 includes bolt holes 3a through which the collar 2 can be bolted to a support structure (not shown). The pipe end 1 is provided with an end fitting 4. Just behind the end fitting 4 is provided a spherical bearing 5. Behind the spherical bearing 5 is a winged collar 6. The wings 6a of the winged collar 6 are proportioned and positioned to locate in slots 7 provided in the flanged collar 2. The wings 6a extend beyond the radius of the spherical bearing 5 to allow for the flanged collar 2 to be passed over the spherical bearing 5 and the wings 6a to engage in the slots 7. In use, the pipe end 1 is located in the bore of the flanged collar 2 with the wings 6a located in the slots 7 to prevent relative rotation between the pipe end 1 and flanged collar 2. Typically, the flanged collar 2 is inserted from an opposite side of a wall of the support structure to the side from which the pipe end 1 is introduced into the flanged collar 2.

The spherical bearing 5 permits a small degree of relative angular and axial movement between the pipe end 1 and the flanged collar 2 to accommodate thermal resizing during thermal cycles arising in the environment of the pipe end 1, for example due to the operation of a gas turbine engine in which the pipe is located. Bolts (not shown) may be used to secure the flange 3 to a support structure (not shown) by means of bolt holes 3a. The support structure may be a circumferential casing arranged around an axis of a gas turbine engine in which the pipe is located. The end feed fitting 4 is configured to fit snugly within the bore of the flanged collar 2 and may incorporate a seal for preventing leakage from the pipe end through the flanged collar 2 in a direction distal from the flange 3.

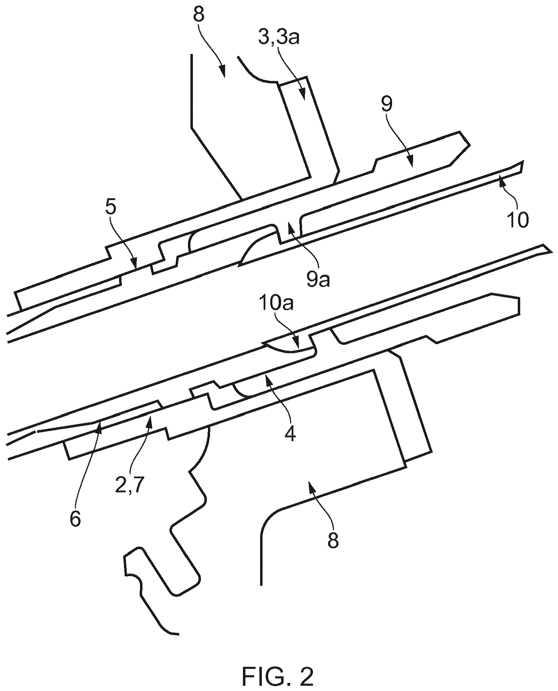

Figure 2 shows a schematic of the assembly of Figure 1 located within a larger assembly, for example a gas turbine engine. As can be seen, the flange 3 of flanged collar 2 abuts a wall 8 of a support structure. The collar 2 passes through an orifice in the wall 8 to an opposite side. The pipe end 1 is inserted into the flanged collar 2 from this opposite side. The pipe end 1 is rotated with respect to the flanged collar 2 until wings 6a of the winged collar 6 locate in the slots 7. A sheath 9 has an internal rib 9a which abuts a flared end 10a of a connecting pipe 10. The sheath 9 is inserted through a bore of the flanged collar 2 from the flanged end and fits snugly over the end feed fitting 4. The flared end 10a of connecting pipe 10 overlaps and abuts against the pipe end fitting 4.

The present invention provides an alternative articulating coupling assembly with some advantages over the described known arrangement.

In accordance with the present invention there is provided an articulating coupling assembly for coupling a pipe end to a support structure, the assembly comprising the features as set forth in Claim 1.

The spherical bearing may have a circumferential array of slots. The slots may be equally spaced. For example, the number of dogs is a factor of the number of slots. The dogs may be equally spaced around the circumference of the flanged collar. In one embodiment, there are 3 equally spaced dogs and 9 equally spaced slots and the dogs are arranged to engage in every third slot.

The assembly may accommodate a single skinned pipe. Alternatively the assembly may accommodate a double skinned pipe. Where a double skinned pipe is accommodated, the spherical bearing may be joined with the inner skin, the outer skin may have an inner diameter approximately equal to the maximum outer diameter of the spherical bearing. In the latter case, by providing more slots than dogs, a continuous channel can be provided between inner and outer skins of a double skinned pipe across the coupling.

A support structure to which the assembly is coupled may comprise an orifice through which the coupling assembly is received.

The assembly may further comprise a long reach nut configured to be insertable through the flanged collar and connect with the pipe end fitting. A connecting pipe may be received in the long reach nut whereby to connect pipes on opposite sides of a wall of the support structure.

By way of example, an embodiment of an articulating coupling assembly in accordance with the invention will now be described with reference to the accompanying figures in which;
Figure 1 shows an articulating coupling assembly as is known in the prior art;
Figure 2 shows the articulating coupling assembly of Figure 1 in situ coupling pipes passing through a wall of a support structure;
Figure 3 shows a 3-D wire frame drawing of an embodiment of an assembled articulating coupling assembly in accordance with the invention;
Figure 4 shows a section through the embodiment of Figure 3 taken in a radial plane passing through the spherical bearing of the embodiment of Figure 3;
Figure 5 shows a section through the embodiment of Figure 3 taken in an axial plane.

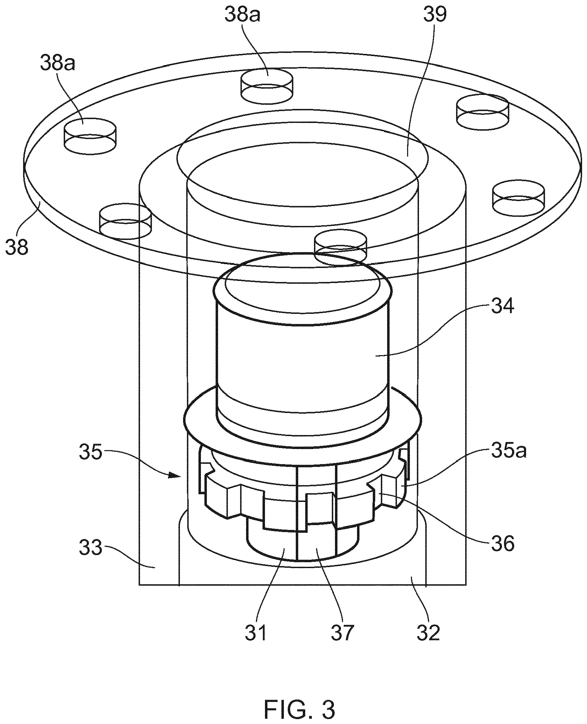

As can be seen in Figure 3, a double skinned pipe has an inner skin 31 and an outer skin 32. An end (32a) of the outer skin 32 is snugly received within a bore of a flanged collar 33. At an end of the inner skin 32, a pipe end fitting 34 is provided which contains a spherical bearing 35. An outer wall 35a of the spherical bearing 35 is provided with an array of axially extending and circumferentially equally spaced recessed slots 36. A radially inner wall of the flanged collar 33 has radially inwardly extending dogs 37 proportioned to fit within the recessed slots 36 whereby to prevent relative rotation between the inner skin and the flanged collar 33. A flange 38 is arranged at one end of the collar 33 and has a circumferential array of bolt holes 38a by means of which it can be secured to a support surface (not shown) having a matching array of holes with the aid of a plurality of bolts secured through the holes.

A long reach nut 39 is inserted from the flanged end of the flanged collar 33 and threads onto the pipe end fitting 34. The long reach nut 39 is proportioned to provide a small clearance between it and other adjacent components. A connecting pipe (not shown) may be connected by means of this long reach nut39, for example with an inner skin inserted into the bore of the long reach nut 39 and an outer skin locating around an outer wall of the long reach nut 39.

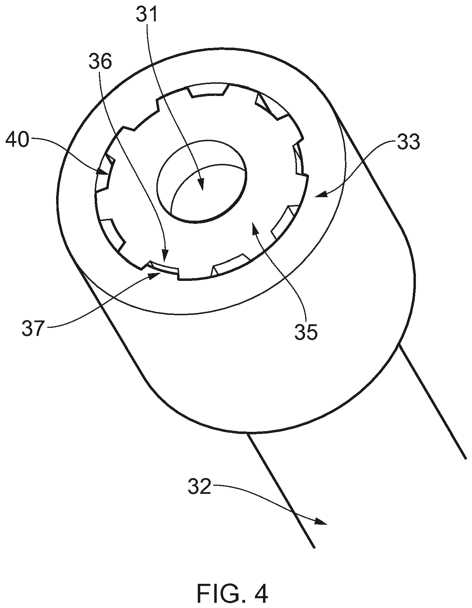

As stated, Figure 4 provides a cross sectional view of the embodiment of Figure 3 taken in a radially extending plane which passes through the spherical bearing 35. Similar components are referenced with the same reference numerals as used in Figure 3. As can be seen, the flanged collar 33 sits snugly around an outer diameter wall of the spherical bearing 35. Nine recessed slots 36 in the spherical bearing 35 extend in a circumferential array, equally spaced around the bearing 35. Three dogs 37 extend radially inwardly from the collar 33 and engage in every third recessed slot 36. The remaining slots 40 provide an array of conduits connecting between opposite ends of the spherical bearing 35. In use the conduits allow fluid to flow continuously in an outer channel bounded by connecting outer skins 32 of a pair of connected double skinned pipes.

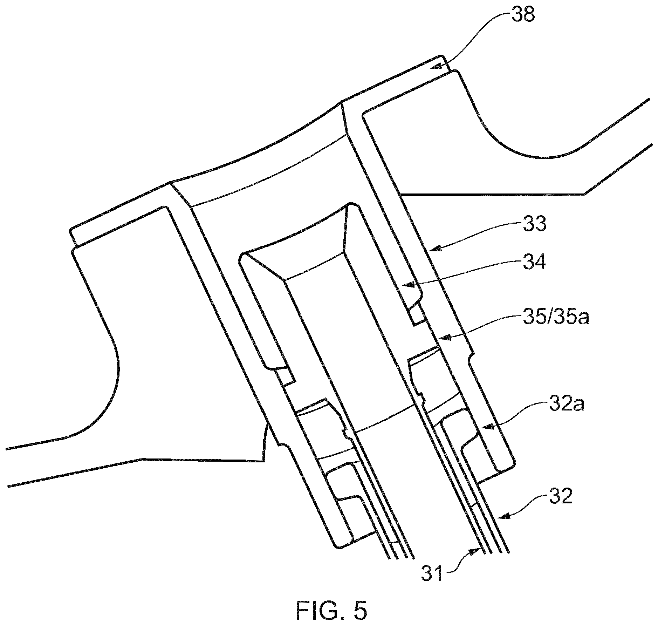

Figure 5 shows a section through the embodiment of Figure 3 taken in an axial plane. The same reference numerals correspond to the same components as shown in Figures 3 and 4.

In an alternative arrangement, the spherical bearing may be arranged around both skins of the double skinned pipe and the coupling assembled as if the outer skin were a single skin pipe.

Whilst specific examples herein refer to feed and scavenger pipes for use in a gas turbine engine, the skilled person will understand the assembly of the invention has much wider application for coupling pipes of a range of sizes and uses and in a range of operating environments. The coupling assembly of the invention is, however, of particular value in gas turbine engine applications since it is resilient to the high forces and temperatures encountered therein and is more compact and lightweight than prior known arrangements used in such environments.

## Claims

1. An articulating coupling assembly for coupling a free end of a pipe (31) to a support structure, the assembly comprising;
a pipe end fitting (34) configured for fitting on the free end (31) of the pipe, and a spherical bearing ,
the spherical bearing having a maximum diameter not greater than a maximum diameter of the pipe end fitting,
a flanged collar (33) configured to receive the pipe end fitting (34) in a snug radial fit,
a radially outer wall (35a) of the spherical bearing having one or more slots (36) extending along the spherical bearing (35) in a direction parallel to an axial direction of said pipe,
a radially inner wall of the flanged collar (33) having one or more radially inwardly protruding dogs (37) proportioned to be received snugly in the one or more slots (36) of the radially outer wall (35a) of the spherical bearing (35) **characterised in that** the number of slots (36) in the spherical bearing (35) is greater than the number of dogs (37) provided on the flanged collar (33).

2. An articulating coupling assembly as claimed in any preceding clam wherein the spherical bearing (35) has a circumferential array of equally spaced slots (36).

3. An articulating coupling assembly as claimed in claim 1 or 2 wherein the number of dogs (37) is a factor of the number of slots (36).

4. An articulating coupling assembly as claimed in claim 3 comprising three equally spaced dogs (37) and nine equally spaced slots (36) and the dogs are arranged to engage in every third slot.

5. An articulating coupling assembly as claimed in any preceding claim further comprising a long reach nut (39) configured to threadedly engage with the pipe end fitting (34).

6. An articulating coupling assembly as claimed in claim 5 wherein the long reach nut (39) is configured to couple with a connecting pipe.

7. An articulating coupling assembly as claimed in any preceding claim arranged to couple a double skinned pipe (31, 32) to a connecting pipe.

8. An articulating coupling assembly as claimed in claim 7 wherein an inner skin (31) of the double skinned pipe is located within the spherical bearing (35) and an outer skin (32) of the double skinned pipe has an inner diameter approximately equal to the maximum outer diameter of the spherical bearing (35) and there are less dogs (37) than slots (36).

9. An articulating coupling assembly as claimed in any preceding claim used to couple sections of an oil feed or oil scavenge pipe line extending across a gas turbine engine in a radial direction with respect to the engine axis.

## Patentansprüche

1. Gelenkige Kopplungseinheit zur Kopplung eines freien Endes eines Rohres (31) mit einer Stützstruktur, wobei die Einheit folgendes umfasst:
Rohrendenanschlussstück (34), das zur Anbringung an dem freien Ende (31) des Rohres gestaltet ist, und ein Kugellager;
wobei das Kugellager einen maximalen Durchmesser aufweist, der nicht größer ist als ein maximaler Durchmesser des Rohrendenanschlussstücks;
einen angeflanschten Kragen (33), der für eine Aufnahme des Rohrendenanschlussstücks (34) in einem radialen Festsitz gestaltet ist;
eine radiale äußere Wand (35a) des Kugellagers mit einem oder mehreren Schlitzen (36), die sich entlang des Kugellagers (35) in eine Richtung erstrecken, die parallel zu einer axialen Richtung des Rohres ist;
eine radiale innere Wand des angeflanschten Kragens (33) mit einer oder mehreren radial einwärts vorstehenden Nasen (37), die für eine feste Aufnahme in dem einen oder mehreren Schlitzen (36) der radial äußeren Wand (35a) des Kugellagers (35) bemessen sind, **dadurch gekennzeichnet, dass** die Anzahl von Schlitzen (36) in dem Kugellager (35) größer ist als die an dem angeflanschten Kragen (33) bereitgestellte Anzahl von Nasen (37) ist.

2. Gelenkige Kopplungseinheit nach einem der vorstehenden Ansprüche, wobei das Kugellager (35) eine umfängliche Anordnung von Schlitzen (36) mit gleichen Zwischenabständen aufweist.

3. Gelenkige Kopplungseinheit nach Anspruch 1 oder 2, wobei die Anzahl von Nasen (37) ein Faktor der Anzahl von Schlitzen (36) ist.

4. Gelenkige Kopplungseinheit nach Anspruch 3, die drei Nasen (37) mit gleichen Zwischenabständen und neun Schlitze (36) mit gleichen Zwischenabständen umfasst, und wobei die Nasen so angeordnet sind, dass sie in jedem dritten Schlitz eingreifen.

5. Gelenkige Kopplungseinheit nach einem der vorstehenden Ansprüche, ferner lange Mutter (39) umfasst, die für einen Schraubeingriff mit dem Rohrendenanschlussstück (34) gestaltet ist.

6. Gelenkige Kopplungseinheit nach Anspruch 5, wobei die lange Mutter (39) für eine Kopplung mit einem Anschlussrohr gestaltet ist.

7. Gelenkige Kopplungseinheit nach einem der vorstehenden Ansprüche, die für eine Kopplung eines doppelwandigen Rohres (31, 32) mit einem Anschlussrohr gestaltet ist.

8. Gelenkige Kopplungseinheit nach Anspruch 7, wobei sich eine innere Wand (31) des doppelwandigen Rohres in dem Kugellager (35) befindet, und wobei eine äußere Wand (32) des doppelwandigen Rohres einen Innendurchmesser aufweist, der ungefähr dem maximalen äußeren Durchmesser des Kugellagers (35) entspricht, und wobei weniger Nasen (37) als Schlitze (36) vorgesehen sind.

9. Gelenkige Kopplungseinheit nach einem der vorstehenden Ansprüche, die für eine Kopplung von Abschnitten einer Ölversorgungs- oder Ölabsaugungsrohrleitung gestaltet ist, die sich in eine radiale Richtung im Verhältnis zu der Motorachse über einen Gasturbinenmotor erstreckt.

## Revendications

1. Ensemble d'accouplement articulé destiné à accoupler une extrémité libre d'un tuyau (31) à une structure de support, l'ensemble comprenant ;
un raccord d'extrémité de tuyau (34) conçu pour s'adapter à l'extrémité libre (31) du tuyau, et un palier sphérique,
le palier sphérique ayant un diamètre maximal non supérieur à un diamètre maximal du raccord d'extrémité de tuyau,
un collier à bride (33) conçu pour recevoir le raccord d'extrémité de tuyau (34) dans un ajustement radial serré,
une paroi radialement extérieure (35a) du palier sphérique ayant au moins une fente (36) s'étendant le long du palier sphérique (35) dans une direction parallèle à une direction axiale dudit tuyau,
une paroi radialement intérieure du collier à bride (33) ayant au moins un chien (37) faisant saillie radialement vers l'intérieur proportionné pour être reçu de façon serrée dans l'au moins une fente (36) de la paroi radialement extérieure (35a) du palier sphérique (35), **caractérisé en ce que** le nombre de fentes (36) dans le palier sphérique (35) est supérieur au nombre de chiens (37) disposés sur le collier à bride (33).

2. Ensemble d'accouplement articulé selon l'une quelconque des revendications précédentes, le palier sphérique (35) ayant un réseau circonférentiel de fentes (36) espacées de manière égale.

3. Ensemble d'accouplement articulé selon la revendication 1 ou 2, le nombre de chiens (37) étant un facteur du nombre de fentes (36).

4. Ensemble d'accouplement articulé selon la revendication 3, comprenant trois chiens (37) espacés de manière égale et neuf fentes (36) espacées de manière égale, les chiens étant disposés de sorte à venir en prise dans une fente sur trois.

5. Ensemble d'accouplement articulé selon l'une quelconque des revendications précédentes, comprenant en outre un écrou à longue portée (39) conçu pour venir en prise par filetage avec le raccord d'extrémité de tuyau (34).

6. Ensemble d'accouplement articulé selon la revendication 5, l'écrou à longue portée (39) étant conçu pour s'accoupler avec un tuyau de raccordement.

7. Ensemble d'accouplement articulé selon l'une quelconque des revendications précédentes, conçu pour accoupler un tuyau à double paroi (31, 32) à un tuyau de raccordement.

8. Ensemble d'accouplement articulé selon la revendication 7, une peau intérieure (31) du tuyau à double paroi étant située à l'intérieur du palier sphérique (35) et une peau extérieure (32) du tuyau à double paroi ayant un diamètre intérieur approximativement égal au diamètre extérieur maximal du palier sphérique (35) et les chiens (37) étant moins nombreux que les fentes (36).

9. Ensemble d'accouplement articulé selon l'une quelconque des revendications précédentes, utilisé pour accoupler des sections d'un tuyau d'alimentation en huile ou d'un tuyau de récupération d'huile s'étendant à travers un moteur à turbine à gaz dans une direction radiale par rapport à l'axe du moteur.
